Europäisches Patentamt

European Patent Office

Office européen des brevets

(11) Numéro de publication: **0 203 887 B1**

## FASCICULE DE BREVET EUROPEEN

(45) Date de publication de fascicule du brevet:
20.03.91

(51) Int. Cl.⁵: **F16L 19/04**

(21) Numéro de dépôt: 86810205.4

(22) Date de dépôt: 06.05.86

(54) Raccordement pour tubes déformables.

(30) Priorité: 31.05.85 CH 2308/85

(43) Date de publication de la demande:
03.12.86 Bulletin 86/49

(45) Mention de la délivrance du brevet:
20.03.91 Bulletin 91/12

(84) Etats contractants désignés:
**AT BE DE FR GB IT LU NL SE**

(56) Documents cités:
EP-A- 0 067 264      DE-A- 1 163 620
DE-A- 3 147 050      FR-A- 2 415 772
GB-A- 807 680        GB-A- 838 246
GB-A- 1 007 245      GB-A- 1 268 765

(73) Titulaire: **PABRECO S.A.**
**32, route de Fribourg**
**CH-1723 Marly(CH)**

(72) Inventeur: **Bujes, Georges**
**Rue de Planafin, 16**
**CH-1723 Marly(CH)**

(74) Mandataire: **Moinas, Michel**
**Moinas & Cie 42, rue Plantamour**
**CH-1201 Genève(CH)**

## Description

La présente invention se rapporte à un raccordement pour tubes déformables, notamment pour tubes en matière plastique comprenant une âme métallique.

Un raccord de ce type est décrit par exemple dans l'exposé EP-A-0 067 264 et s'est avéré donner toute satisfaction pour des applications "douces", par exemple dans les tuyauteries et raccords pour le chauffage par le sol. En effet, ces raccords ont une bonne tenue à la température et une forte résistance à l'arrachement, de l'ordre de 3 000 N.

Pour des applications où des résistances à l'arrachement sont absolument indispensables, sous contraintes de température notamment ou encore pour des applications où les chocs thermiques sont violents, ce raccord a cependant montré ses limites.

Le document GB-A-1 268 765 divulgue un raccordement pour tubes déformables comprenant un écrou 11 et une bride intercalaire 10 passée au préalable par dessus le tube, ainsi qu'un manchon fileté 12 dans lequel s'asseoit une pièce interne de révolution 5. Lors de l'assemblage, on engage l'extrémité du tube 8 dans les crans 9 de la pièce interne 5 jusqu'à buter contre la collerette 7, on fait glisser la bride jusqu'au chanfrein 14 du manchon 12, puis on visse l'écrou dans le manchon.

Toutefois, il est évident que l'écrou 11 ne peut nullement passer lui même par dessus la bride, mais comprime celle-ci longitudinalement dans l'espace restreint au niveau du chanfrein du manchon. Cette bride étant en plastique ou en caoutchouc dur, et non en métal, la partie avant s'arc-boute dans l'extrémité du tube alors que la partie arrière se déforme dans une configuration inconnue.

Le but de la présente invention est un raccord pour tubes déformables notamment pour tubes composites plastique-métal-textile-plastique, lequel raccord doit avoir une résistance à l'arrachement et aux chocs thermiques violents. De telles tubes présentent simultanément l'avantage des tubes plastiques pour leur absence de corrosion et des tubes métalliques pour leur rigidité. Toutefois, il convient, au niveau des raccords, d'empêcher l'application sur les tubes d'efforts de cisaillement longitudinaux qui résulteraient en un pelage des couches, la remontée de liquide jusqu'à la tranche du tube ce qui gonflerait la couche textile ainsi que la mise en contact de la couche d'aluminium avec le cuivre du raccord, soit au niveau de la tranche du tube soit par coupure avec des crans de l'une des couches plastiques.

L'invention vise précisément un perfectionnement qui présente des caractéristiques très nettement supérieures, en particulier sur l'étanchéité et la résistance sous contraintes de pression de température. De plus, le raccordement selon l'invention est d'un usage plus universel dans la mesure où il existe sous deux variantes, mâle et femelle.

Il comprend un manchon fileté, une bride intercalaire et une pièce interne de révolution sur laquelle le tube préalablement évasé vient s'appuyer. La bride et la pièce interne définissent à elles deux un volume annulaire évasé, puis droit, qui est limité par un renflement annulaire de la pièce interne faisant butée et dans lequel le tube vient se loger et se comprimer. La section du volume annulaire reste sensiblement rectangulaire après montage. Ce volume annulaire comprend, ménagées sur la surface interne, une première gorge recevant un joint torique et une seconde gorge par laquelle le tube vient s'ancrer. Un second joint fait butée contre le renflement au fond du volume annulaire. La surface externe du volume amulaire est sensiblement droite.

Dans une première variante, le manchon est femelle et fileté intérieurement, la bride intercalaire prend place entre le tube et le manchon, le manchon et la pièce interne forment une seule et même pièce d'un seul tenant et la bride est solidaire d'un écrou mâle fileté extérieurement venant se visser dans le manchon.

Une telle variante est d'un emploi particulièrement intéressant pour le raccordement droit de deux tubes déformables, par exemple en matière plastique avec une âme métallique intérieure. Dans ce cas, le manchon présente une symétrie par rapport à son plan transversal médiant et on retrouve les éléments cités ci-dessus à l'identique, à droite et à gauche, mais symétriquement.

Dans une seconde variante, le manchon est mâle et fileté extérieurement, la bride intercalaire prend place entre le tube et un écrou femelle qui entoure et recouvre complètement la bride. Cet écrou vient se visser sur le manchon en repoussant le tube contre la bride.

Le manchon et la pièce interne peuvent s'appuyer l'un sur l'autre selon une suface inclinée sensiblement à 45° vers l'intérieur, un joint annulaire venant parfaire le contact. De préférence, le joint annulaire est logé avant vissage dans un décrochement ménagé sur la pièce interne.

Cette variante peut s'utiliser aisément en substitution de la variante précédente, mais elle présente l'avantage de ne faire appel qu'à des manchons classiques et plus simples à usiner. Ce manchon peut être droit, en T, en X, etc. pour des raccordements correspondants.

On retiendra également que, d'une façon particulièrement avantageuse, le manchon peut être simplement un embout soudé sur une paroi, de cuves par exemple. Le raccordement ne présente alors qu'un seul côté fileté, celui qui va recevoir le tube à raccorder. On peut donc facilement, de la sorte, brancher des tubes déformables sur des cuves ou réservoirs et cette deuxième variante est donc d'un emploi plus général.

L'invention sera mieux comprise en référence au dessin annexé, donné à titre d'exemple non limitatif. Dans ce dessins :

- la figure 1 est une vue d'un raccordement droit selon l'invention, monté dans sa première variante,

- la figure 2 est une vue en coupe du manchon droit avant montage,

- la figure 3 est une vue en coupe de la partie restante du raccordement, avant montage,

- la figure 4 est une vue correspondant à la figure 3, mais de côté,

- la figure 5 est une vue en coupe d'un raccordement selon l'invention, monté dans sa deuxième variante, et

- les figures 6 ou 7 représentent, en coupe toujours, les diverses étapes du montage du raccordement de la figure 5.

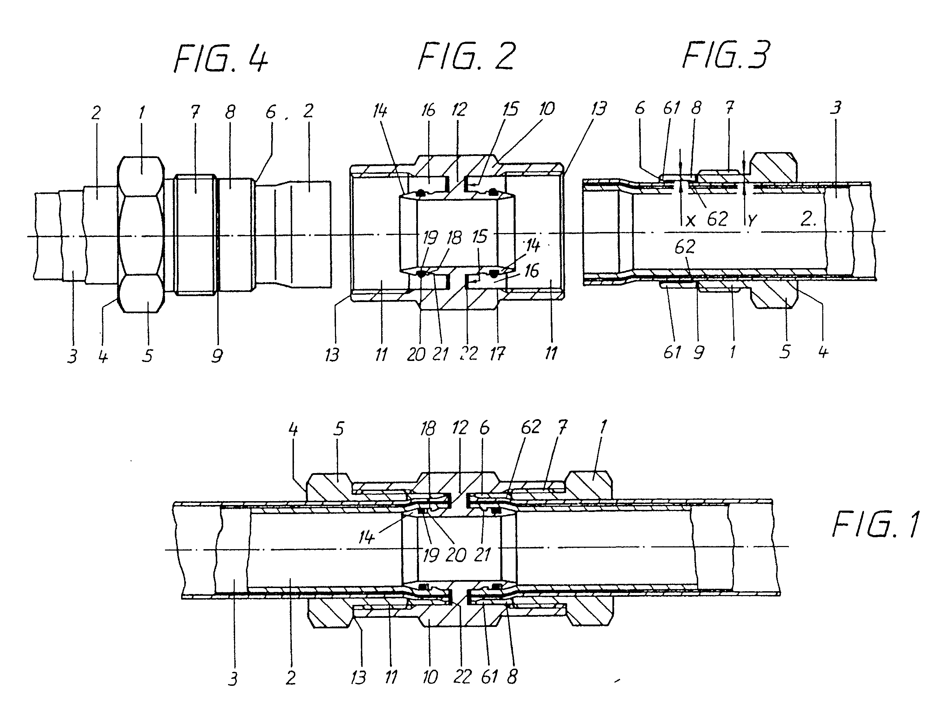

En référence aux figures 3 et 4, on voit de chaque côté un écrou 1 enfilé sur un tube 2 portant une âme métallique 3. Le tube présente un formage réalisé après avoir enfilé la bague, pour lui permettre d'être facilement enfilé dans le raccord. Chacun de ces écrous porte, à une de ses extrémités 4, un col 5 permettant la préhension par une clé pour le vissage. L'autre extrémité 6 laisse dépasser le tube 2.

L'écrou 1 se termine par une bride 8, après un étranglement annulaire 9 faisant faiblesse. L'écrou 1 est fileté en 7, tandis que la bride 8 est lisse.

L'extrémité 6 de la bride 8 est biseautée de façon à former une surface 61 tournée vers l'intérieur ; l'épaisseur x de la bride 8 est inférieure à l'épaisseur y de l'écrou 1, la réduction en épaisseur étant réalisée pour créer intérieurement, devant l'étranglement 9, une seconde surface conique 62 tourne vers l'intérieur.

Comme on le voit sur la figure 2, le manchon 10 dans lequel va venir s'assujettir de chaque côté les brides 1, porte intérieurement des filetages 11 correspondant aux filetages 7 des écrous. De plus il comprend, entre son axe et sa paroi intérieure, une surface de révolution tronc-conique convergente 14 vers son centre, laquelle émerge de la paroi intérieure 15 à une profondeur supérieure à la longueur de pénétration de l'écrou 1 dans le manchon 10. Ainsi est ménagé un volume annulaire évasé, puis droit dans lequel après montage par vissage l'extrémité du tube 2 va venir se loger et se comprimer en se déformant.

Le volume annulaire 16 est défini par deux faces 17,18. Sur sa face interne 18, on rencontre successivement une première gorge 19 recevant un joint annulaire 20 et une seconde gorge 21 d'ancrage. La paroi intérieure 15 du manchon est garnie d'un second joint 22 contre lequel l'extrémité du tube 2 va prendre appui. On évite ainsi les contacts métal·métal (pour un tube armé métalliquement) et les phénomènes électrolytiques que ce contact pourrait entraîner.

Avantageusement, la surface biseautée 61 formant l'extrémité de la bride 8 est munie de stries.

Le filetage 11 intérieur au manchon 10 est interrompu avant que n'émerge la surface de révolution tronc-conique convergente 14. La surface lisse ainsi ménagée est d'un diamètre au plus égal au diamètre en creux du filetage 11.

Les espaces délimités par le droit du filetage 11 intérieur au manchon 10 dans un sens, et par le droit de la surface de révolution tronc-conique convergente dans l'autre sens, se chevauchent.

Comme on le voit à la figure 1, le vissage de l'écrou 1 dans le manchon 10 se traduit tout d'abord par le positionnement du tube 2 dans le manchon 10. Dès le vissage, l'étranglement 9 se rompt et la bride 8 se sépare ainsi de l'écrou 9. En continuant le vissage, cette bride est simplement poussée et, s'étant séparée de l'écrou 1, n'est plus entraînée en rotation. En conséquence, le tube ne subit plus aucune contrainte de rotation, les stries ménagées sur la première surface conique 61 pouvant de surcroît s'opposer à la rotation.

L'extrémité 2 du tube se déforme et vient se loger dans l'espace 16 délimité par les surfaces de révolution tronc-conique d'abord, cylindrique ensuite. Le tube 2 s'y déforme, en venant buter contre le joint 22 et en étant coincé entre le joint 20 et le manchon 10 proprement dit. Ce tube 2, sous la déformation, a tendance à fléchir en expansion dans la gorge 21 pour venir s'y accrocher fermement.

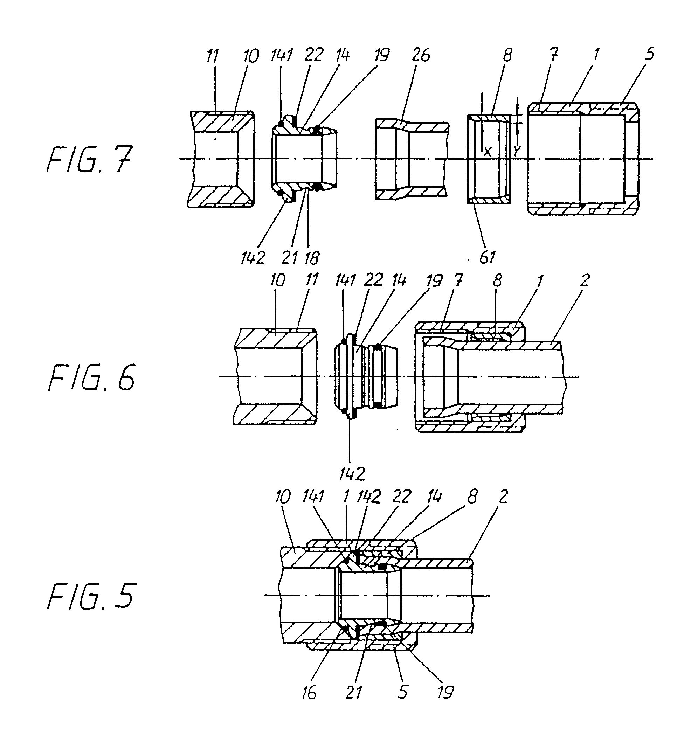

Sur la figure 5, on retrouve les éléments des figures précédentes, le manchon 10 mâle est fileté extérieurement en 11, tandis que l'écrou 1 est femelle et fileté intérieurement en 7. La tête de l'écrou, qui sert de préhension pour le vissage est représentée en 5. Cet écrou recouvre complètement l'ensemble, donc la bride 8 et, lors du vissage, la repousse et la presse contre le tube 2.

On retrouve le volume annulaire 16 dont la face intérieure 18 est constituée de la surface extérieure de la pièce interne 14, cette pièce interne 14 étant indépendante du manchon 10. Cette pièce 14 et le manchon 10 s'appuient l'un sur l'autre selon une surface inclinée à 45° vers l'intérieur, un joint annulaire 141 venant parfaire le contact.

La pièce interne 14 présente la gorge 19 recevant le joint torique 20, puis la gorge 21 dans lequel le tube 2 va venir s'ancrer. Cette pièce 14 présente également un renflement annulaire 142 faisant butée et fond du volume annulaire 16.

Contre ce renflement 141 est placé le joint 22 contre lequel va venir s'appuyer le tube 2.

La pièce interne 14 comprend également, au-delà de son renflement annulaire 142, un décrochement dans lequel est logé le joint annulaire 141 situé à la surface de séparation de la pièce interne 14 et du manchon 10.

Le montage de cette variante s'exécute dans l'ordre inverse des figures 5 à 7. A ce sujet, on remarquera également que la largeur x de la bride 8 est inférieure à la largeur y, qui ici est représentée par l'extrémité extérieure de cette même bride 8.

Avec les différents éléments constitutifs (figure 7), on commence par enfiler sur le tube 2 préalablement évasé la bride 8, puis l'écrou de recouvrement 5. En variante, la bride 5 est située à demeure à l'intérieur de l'écrou et maintenue en place par un point de soudure cédant à la moindre sollicitation en vissage.

On se retrouve alors dans la position illustrée à la figure 6 et on continue le montage en enfilant la pièce interne 14, puis en positionnant en bout le manchon 10. Il ne reste plus alors qu'à visser l'écrou 5 sur le manchon 10 pour que tous les éléments prennent place et que le raccordement soit monté. On est alors dans la position illustrée à la figure 5.

Dans cette variante également, l'extrémité de la bride 8 est également biseautée pour présenter une surface conique 61 tournée vers l'extérieur. Cette surface conique 61 est munie de stries.

Le raccordement selon l'invention peut être utilisé avec tous les tubes déformables, tels que les tubes en matière plastique, simples ou armés d'une âme métallique, ainsi que les tubes composites plastique/métal/textile/plastique par exemple. Selon les diamètres et les spécifications de construction, ils peuvent être calibrés pour une tenue donnée à la pression, et une très forte résistance à l'arrachement, en tout cas supérieure à 3 000 N. Ils peuvent être employés pour raccorder des tubes pour différents fluides notamment l'air, le gaz, l'eau, les eaux d'évacuation, les liquides agressifs. Ils trouvent donc leur emploi dans l'industrie des boissons, dans l'industrie alimentaire, dans l'industrie du froid pour les liquides de réfrigération ou dans les industries chimique, pétrolière et pétrochimique par exemples.

Comme on l'aura constaté, l'invention a été illustrée par un dessin représentant un raccordement, respectivement une demi-raccordement, droit. Il va de soi que le raccord peut être en T, en X ou en coude. De la même façon, le raccordement peut être un simple embout, prenant place par exemple dans un logement approprié disposé sur une cuve ou soudé dans la paroi de celle-ci. Dans ce cas, il ne présente qu'une seule partie filetée et, évidemment, un seul écrou est utilisé pour connecter le tube.

## Revendications

1. Raccordement pour tubes déformables comprenant un manchon (10) fileté, une bride intercalaire (8) et une pièce interne (14) de révolution sur laquelle le tube (2) préalablement évasé vient s'appuyer, la bride (8) et la pièce interne (14) définissant à elles deux, un volume annulaire (16) évasé, puis droit, qui est limité par un renflement annulaire (142) de la pièce interne (14) faisant butée et dans lequel le tube (2) vient se loger et est comprimé radialement, caractérisé en ce que la section du volume annulaire (16) reste sensiblement rectangulaire après montage, ce volume annulaire (16) comprenant, ménagées sur la surface interne (18), une première gorge (19) recevant un joint torique (20) et une seconde gorge (21) dans laquelle le tube (2) vient s'ancrer, un second joint (22) faisant butée contre le renflement (142) au fond du volume annulaire (16), et en ce que la surface externe du volume annulaire (16) est essentiellement droite.

2. Raccordement selon la revendication 1, caractérisé en ce que le manchon (10) est femelle et fileté intérieurement, la bride intercalaire (8) prend place entre le tube (2) et le manchon (10), le manchon (10) et la pièce interne (14) forment une seule et même pièce d'un seul tenant et en ce que la bride (8) est solidaire d'un écrou (1) mâle fileté extérieurement venant se visser dans le manchon (10).

3. Raccordement selon la revendication 2, caractérisé en ce que la bride (8) et l'écrou (1) sont reliés par un étranglement annulaire (9) faisant faiblesse de sorte qu'en cours de vissage, cet étranglement (9) cède et la bride (8) se désolidarise de l'écrou (1).

4. Raccordement selon la revendication 1, caractérisé en ce que le manchon (10) est mâle et fileté extérieurement, la bride intercalaire (8) prend place entre le tube (2) et un écrou (1) femelle qui entoure et recouvre complètement la bride (8), cet écrou (1) venant se visser sur le manchon (10) en repoussant le tube (2) contre la bride (8).

5. Raccordement selon la revendication 4, caractérisé en ce que le manchon (10) et la pièce interne (14) s'appuyent l'un sur l'autre selon une surface inclinée sensiblement à 45° vers l'intérieur, un joint annulaire (141) venant parfaire le contact.

6. Raccordement selon la revendication 5, caractérisé en ce que le joint annulaire (141) est logé avant vissage dans un décrochement ménagé sur la pièce interne (14).

7. Raccordement selon la revendication 1, 2 ou 4, caractérisé en ce que l'extrémité (6) de la bride (8) est biseautée de façon à former une surface conique (61) tournée vers l'intérieur.

8. Raccordement selon la revendication 7, caractérisé en ce que la surface conique (61) est munie de stries.

9. Raccordement selon la revendication 1, 2 ou 4, caractérisé en ce que l'autre extrémité de la bride (8) est elle aussi biseautée de façon à former une seconde surface conique (62) tournée vers l'intérieur également.

10. Utilisation du raccord selon la revendication 1 au raccordement de tubes en matière plastique.

11. Utilisation selon la revendication 10, caractérisé en ce que les tubes en matière plastique contiennent, noyée dans cette matière, une âme métallique déformable et, éventuellement, une enveloppe textile.

## Claims

1. A coupling for deformable tubes including a threaded sleeve (10), an intermediate collar (8) and an internal rotation-symmetric component (14) upon which the tube (2), which has been previously flared out, is seated, said collar (8) and said internal component (14) defining there between them a flared annular space (16) which then becomes straight and which is delimited by an absetment forming annular beading (142) of said internal component (14) and in which the tube (2) comes to rest and is compressed radially, characterized in that the cross section of said annular space (16) remains substantially rectangular after assembly, said annular space (16) containing, machined into the internal surface (18) thereof, a first groove (19) which accomodates a sealing means in the form of a ringg (20), and a second groove (21) in which said tube (2) becomes anchored, a second sealing means (22) abuting against said beading (142) at the bottom of said annular space (16), and the external surface of said annular space (16) being substantially straight.

2. The coupling means according to claim 1, wherein said sleeve (10) is female and is threaded internally and said intermediate collar (8) is located between said tube (2) and said sleeve (10), with said sleeve (10) and said internal component (14) forming a single integrated member and wherein said collar (8) is integrally combined with an externally-threaded male nut (1) screwably received in said sleeve (10).

3. The coupling according to claim 2, wherein said collar (8) and said nut (1) are connected by means of an annular constriction (9) which weakens them in such a way that, during the course of the screwing in, said constriction (9) ruptures and said collar (8) becomes separated from said nut (1).

4. The coupling according to claim 1, wherein said sleeve (10) is male and threaded externally, said intermediate collar (8) is located between said tube (2) and a female nut (1) which encloses and completely covers said collar (8), and said nut (1) is screwed onto said sleeve (10) and forces said tube (2) against said collar (8).

5. The coupling according to claim 4, wherein said sleeve (10) and said internal component (14) are in contact with each other along a surface inclined substantially at 45° towards the side, there being an annular sealing means (141) to ensure correct contact and proper sealing.

6. The coupling according to claim 5, wherein said annular sealing means (141) is placed in a stepped-down portion on said internal component (14) before screwing-in takes place.

7. The coupling according to claim 1, 2 or 4, wherein the extremity (6) of said collar (8) is chamfered in such a manner as to form a conical surface (61) facing towards the inside.

8. The coupling according to claim 7, wherein said conical surface (61) is furnished with ridges.

9. The coupling according to claim 1, 2 or 4, wherein the other extremity of said collar (8) is also chamfered in such a manner as to form a second conical surface (62) also facing towards the inside.

10. Use of the coupling according to claim 1 for connecting tubes of plastic material.

11. Use according to claim 10, wherein the tubes of plastic material contain, embedded in the plastic material, a deformable metal core and optionally an envelope of textile material.

**Ansprüche**

1. Verbindung für verformbare Rohre mit einer Schraubmuffe (10), einem Zwischenflansch (8) und einem rotierbaren Innenstück (14), auf welchem das zuvor aufgeweitete Rohr aufliegt, der Flansch (8) und das Innenstück (14) zusammen einen aufgeweiteten, dann geraden Ringraum (16) bilden, welcher von einer ringförmigen Verstärkung (142) des ein Widerlager bildenden Innenstückes (14) begrenzt wird und in welchem das Rohr geführt und radial zusammengedrückt wird, dadurch gekennzeichnet, daß der Abschnitt des Ringraumes (16) nach der Montage etwa im rechten Winkel bleibt, und daß der Ringraum (16) eine an der Innenfläche (18) ausgesparte, einen 0-Ring (20) aufnehmende erste Nut (19) und eine zweite Nut (21) aufweist, in welcher sich das Rohr verankert, wobei sich eine zweite Dichtung (22) am Boden des Ringraumes (16) gegen die Verstärkung (142) abstützt, und daß die Außenfläche des Ringraumes (16) im wesentlichen gerade ist.

2. Verbindung gemäß Anspruch 1, dadurch gekennzeichnet, daß die Schraubmuffe (10) als Mutterteil mit Innengewinde ausgebildet ist, der Zwischenflansch (8) zwischen dem Rohr (2) und der Schraubmuffe (10) angeordnet ist, die Schraubmuffe (10) und das Innenstück (14) ein einheitliches zusammenhängendes Teil bilden, und daß der Flansch mit einer als Vaterteil ausgebildeten, außen mit einem Gewinde versehenen Mutter drehfest verbunden ist, wobei diese in der Schraubmuffe (10) verschraubbar ist.

3. Verbindung gemäß Anspruch 2, dadurch gekennzeichnet, daß der Flansch (8) und die Mutter (1) durch eine eine Schwachstelle bildende, ringförmige Einschnürung (9) verbunden sind, wobei diese Einschnürung im Verlauf der Verschraubung nachgibt und sich der Flansch (8) von der Mutter (1) trennt.

4. Verbindung gemäß Anspruch 1, dadurch gekennzeichnet, daß die Schraubmuffe als Vaterteil ausgebildet und außen mit einem Gewinde versehen ist, der Zwischenflansch (8) zwischen dem Rohr (2) und einer als Mutterteil ausgebildeten, den Flansch umgebenden und vollständig umschließenden Mutter (1) angeordnet ist, wobei beim Verschrauben der Mutter (1) auf der Muffe (10) das Rohr (2) gegen den Flansch (8) schiebbar ist.

5. Verbindung gemäß Anspruch 4, dadurch gekennzeichnet, daß die Schraubmuffe (10) und das Innenstück (14) aneinander längs einer Fläche in Anlage kommen, die etwa 45° nach innen geneigt ist, wobei eine Ringdichtung (141) den Kontakt herstellt.

6. Verbindung gemäß Anspruch 5, dadurch gekennzeichnet, daß die Ringdichtung (141) vor der Schraubverbindung auf einer Abstufung des Innenstückes (14) angeordnet ist.

7. Verbindung gemäß Anspruch 1, 2 oder 4, dadurch gekennzeichnet, daß das äußere Ende (6) des Flansches (8) derart abgeschrägt ist, daß es eine konische. gegen das Innere weisende Fläche bildet.

8. Verbindung gemäß Anspruch 7, dadurch gekennzeichnet, daß die Konusfläche mit Rillen versehen ist.

9. Verbindung gemäß Anspruch 1, 2 oder 4, dadurch gekennzeichnet, daß auch das andere Ende des Flansches (8) derart abgeschrägt ist, daß eine zweite konische Fläche (62) gebildet wird, die gleichfalls nach innen weist.

10. Verwendung der Verbindung nach Anspruch 1 für die Verbindung von Kunststoffrohren.

11. Verwendung gemäß Anspruch 10, dadurch gekennzeichnet, daß die Kunststoffrohre einen in Kunststoff eingebetteten, verformbaren Kern aus Metall und gegebenenfalls eine Textilumhüllung aufweisen.

FIG. 4

FIG. 2

FIG.3

FIG.1

EP 0 203 887 B1

FIG. 7

FIG. 6

FIG. 5

EP 0 203 887 B1